# EUROPÄISCHE PATENTANMELDUNG

(11) **EP 1 227 426 A1**
(43) Veröffentlichungstag der Anmeldung: **31.07.2002**
(21) Anmeldenummer: 01810084.2
(22) Anmeldetag: 30.01.2001
(51) Int. Cl.: G06K 1/05, B23H 9/06, G06K 1/12

(54) **Verfahren zum Anbringen eines maschinenlesbaren Datenträgers an einem Werkstück**

(71) Anmelder: Ulrich AG, 9015 St. Gallen (CH)
(72) Erfinder: Ulrich, Christoph H., 9053 Teufen (CH); Giovanettoni, Lukas, 9500 Wil (CH)
(74) Vertreter: Wenger, René

(57) **Zusammenfassung**

Werkstücke (2) wie z. B. chirurgische Arbeitswerkzeuge werden mit einem maschinenlesbaren Datenträger (1) versehen, indem in einem Datenabschnitt (3) einzelne Vertiefungen (4) angeordnet werden, welche insgesamt einen zweidimensionalen Matrixcode (5) bilden. Besonders vorteilhaft werden die Vertiefungen dabei durch ein spanabhebendes Arbeitsverfahren, insbesondere durch Bohren herausgearbeitet. Schädliche Strukturveränderungen am Material wie sie beim Einbrennen eines Codes mittels Laserstrahlen auftreten können, werden zuverlässig vermieden. Die Kontrastwirkung der Vertiefungen ist ausreichend und der Datenträger ist gegenüber mechanischen Einwirkungen äusserst widerstandsfähig.

## Beschreibung

Die Erfindung betrifft ein Verfahren zum Anbringen eines maschinenlesbaren Datenträgers an einem Werkstück, insbesondere an einem chirurgischen Instrument. Damit wird eine Markierung dieses Arbeitswerkzeugs angestrebt, um dessen Einsatz zu überwachen und gegebenenfalls zu steuern.

Insbesondere im medizinischen Bereich weitverbreitete Datenträger sind die sogenannten Barcode, deren Daten mit einem Barcodeleser erfassbar sind. So beschreibt beispielsweise bereits die DE A 39 17 876 ein System zum Beladen eines chirurgischen Instrumentensets, bei dem an jedem Instrument ein Datenträger in der Form eines Barcodes angeordnet ist. Da aufgedruckte Barcodes bei derartigen Instrumenten aus verschiedenen Gründen nicht in Betracht kommen, wird empfohlen, den Barcode mittels eines Laserstrahles in das metallische Material der Instrumente einzugravieren.

Ein grundlegender Nachteil der linear ausgerichteten Barcodes besteht in der limitierten Kapazität der speicherbaren Datenmenge. Ausserdem muss die lineare Ausrichtung beim Scannen berücksichtigt werden, was eine entsprechende Positionierung voraussetzt. In der maschinenlesbaren Datenträgertechnik sind daher bereits verschiedene zweidimensionale Matrixcodes entwickelt worden, deren Speicherkapazität wesentlich grösser ist, wobei die Lage des Codes beim Lesen keine Rolle spielt. Ein derartiger Matrixcode ist beispielsweise in der CH A 679 084 beschrieben.

Dieser Code ist auch unter der Bezeichnung "Data Matrix Code" bekannt und eingeführt.

Ein erhebliches Problem beim oberflächlichen Anbringen von Datenträgern mittels Laserstrahlen besteht darin, dass die dabei ausgelösten molekularen Strukturveränderungen in einer Metalllegierung zu einer späteren Rostbildung führen kann. Ausserdem ist die Oberflächentiefe der Markierung derart klein, dass durch mechanische Einwirkungen mit der Zeit Beschädigungen eintreten können, welche zu Lesefehlern führen. Es ist daher eine Aufgabe der Erfindung, ein Verfahren der eingangs genannten Art zu schaffen, das auf kleinstem Raum die Anbringung eines leicht lesbaren Datenträgers derart erlaubt, dass dieser dauerhaft und ohne schädigende Einwirkung auf den Werkstoff auf dem Arbeitswerkzeug verbleibt. Diese Aufgabe wird erfindungsgemäss mit einem Verfahren mit den Merkmalen von Anspruch 1 gelöst.

Die Erfindung nutzt auf überraschend einfache Weise die Tatsache aus, dass bei einem zweidimensionalen Matrixcode die Art der Kontrastbildung auf den einzelnen Matrixpunkten keine Rolle spielt und dass selbst bei relativ geringer Kontraststärke noch eine Lesbarkeit gewährleistet ist. Die Vertiefungen bewirken somit ebenfalls eine genügende Kontrastwirkung, weil sie sich im Auflicht ausreichend von den ebenen Flächen des Datenabschnitts unterscheiden. Die Vertiefungen bleiben auch bei starker mechanischer Beanspruchung wie z. B. gegenseitiges Aneinanderreiben der Instrumente, völlig intakt und sie sind bakteriologisch problemlos. Eine Beeinträchtigung der Oberflächenstruktur wie bei der hohen thermischen Belastung durch Lasermarkierung findet nicht statt.

Die Vertiefungen können in unterschiedlichen Arbeitsprozessen angebracht werden. Dabei spielt selbstverständlich der Werkstoff des Werkstücks eine erhebliche Rolle. Chirurgische Instrumente sind normalerweise aus rostfreiem Stahl gefertigt. Aber auch Arbeitswerkzeuge aus Leichtmetall, Buntmetall, Keramik oder Kunststoff lassen sich mit dem erfindungsgemässen Verfahren bearbeiten. Der Ausdruck "Werkstück" umfasst im übrigen nicht nur Arbeitswerkzeuge im eigentlichen Wortsinn wie z. B. Scheren, Skalpelle, usw., sondern auch andere markierfähige Teile wie z. B. bestimmte Implantate usw.

Eine denkbare Arbeitsmethode zum Anbringen der Vertiefungen wäre beispielsweise die Elektroerosion oder das Prägen mit Hilfe eines Prägewerkzeugs. Im Hinblick auf die mögliche Vielzahl der nötigen Werkzeuge für jeden einzelnen Code sind dabei allerdings Grenzen gesetzt, es sei denn, die Werkzeuge wären jeweils für unterschiedliche Codes verstellbar. Als besonders vorteilhaft hat sich daher die Anbringung der Vertiefungen durch ein spanabhebendes Arbeitsverfahren, insbesondere durch Bohren bzw. Fräsen erwiesen.

Bohrungen lassen sich hochpräzise mit einem rechnergesteuerten Koordinatenbohrwerk anbringen.

Der Datenabschnitt wird vor dem Anbringen der Vertiefungen vorteilhaft als Planfläche am Werkstück angebracht. Eine derartige Planfläche bildet eine Referenzebene mit gleichen Bedingungen für sämtliche Vertiefungen, unabhängig von der Beschaffenheit der übrigen Werkstückoberfläche. Die Planfläche kann beispielsweise durch Fräsen oder Schleifen angebracht werden.

Ein hoher Grad an Betriebssicherheit wird schliesslich dadurch erreicht, dass zusätzlich zum Matrixcode ein alphanumerischer Code am Werkstück angebracht wird. Dieser erlaubt eine visuelle Identifikation des Werkstückes auch dann, wenn ein Lesegerät nicht zur Verfügung steht, oder wenn die Maschinenlesbarkeit aus anderen Gründen nicht möglich ist.

Zum Anbringen der Vertiefungen wird das Werkstück vorteilhaft in einer Spannvorrichtung eingespannt, um dann zuerst den Datenabschnitt als Planfläche aus dem Werkstück herauszufräsen. Anschliessend werden die Vertiefungen mit einem rechnergesteuerten Koordinatenbohrwerk gebohrt. Die Prüfung des Matrixcodes erfolgt im eingespannten Zustand des Werkstücks mit einem Lesegerät, wobei gegebenenfalls bei einem nicht identifizierbaren Code das Fräsen der Planfläche, das Bohren der Vertiefungen und die Prüfung wiederholt werden müssen.

Die Erfindung betrifft auch ein Werkstück oder Arbeitswerkzeug, insbesondere ein chirurgisches Instrument mit einem maschinenlesbaren Datenträger, das die Merkmale im Anspruch 7 aufweist.

Die Vertiefungen sind vorteilhaft rotationssymmetrisch ausgebildet, was sich beim Bohren automatisch ergibt. Polygonale Vertiefungen sind aber ohne weiteres denkbar, insbesondere bei einer Herstellung mittels Prägewerkzeugen. Es ist ausserdem vorteilhaft, wenn die Vertiefungen im Querschnitt einen sich gegen den Grund verjüngenden, vorzugsweise einen kegelstumpfförmigen Abschnitt aufweisen. Die ringförmige Kegelmantelfläche erhöht je nach Lichteinfall die Kontrastwirkung. Der sich verjüngende Abschnitt kann dabei einen Öffnungswinkel von beispielsweise 80° bis 120° aufweisen.

Je nach Auflösungsgrad des Lesegeräts und der eingesetzten Arbeitstechnik sind der Minituarisierung des Matrixcodes kaum Grenzen gesetzt. Eine optimale Datendichte kann jedoch erreicht werden, wenn die Vertiefungen in der Ebene des Datenabschnitts einen Durchmesser von weniger als 0,15 mm und einen Abstand zwischen den Zentren von weniger als 0,2 mm aufweisen. Der Matrixcode kann sich auf den beiden Achsen auf einer quadratischen oder auf einer rechteckigen Fläche erstrecken. Die Distanz zwischen dem Grund der Vertiefungen und der Ebene des Datenabschnitts, also die eigentliche Bohrtiefe, beträgt vorteilhaft weniger als 0,05 mm. Eine optimale Kontrastwirkung ist dabei gewährleistet, ohne dass die Reinigung der Vertiefungen problematisch wäre.

Das Lesegerät zum Einlesen eines erfindungsgemässen Datenträgers ist vorteilhaft gekennzeichnet durch einen Lesekopf mit einer in die optische Achse integrierten, zentralen Beleuchtung. Damit wird an den Kegelmantelflächen der Vertiefungen ein anderer Abstrahlwinkel erreicht, was von der Kamera als ringförmiger Kontrast registriert wird. Je nach Art der Vertiefung wäre es aber auch denkbar, dass die optische Achse von einer ringförmigen Beleuchtung umgeben ist.

Die Erfindung betrifft auch ein Verfahren zum Überwachen von mit einem erfindungsgemässen Datenträger versehenen Werkstück oder Arbeitswerkzeug mit den Merkmalen im Anspruch 13. Ein derartiges Verfahren ermöglicht insbesondere im medizinischen Bereich eine Vielzahl verschiedener Funktionen und Eigenschaften. Arbeitsabläufe werden dadurch vereinfacht und ein optimales Qualitätsmanagement ist gewährleistet. Auch betriebswirtschaftliche Daten können mit dem Matrixcode ständig überwacht und abgefragt werden.

Typische Arbeitsabläufe im Spitalbereich sind beispielsweise das Erstellen und Prüfen sogenannter Siebpläne für das Sterilisieren ganzer Instrumentensets, wie z. B. in der eingangs erwähnten DE A 39 17 876 beschrieben. Auch der Sterilisiervorgang selbst lässt sich über den Matrixcode steuern, indem beispielsweise eine zulässige Sterilisationstemperatur oder Sterilisationsdauer automatisch ausgewählt wird. Ein weiterer Arbeitsablauf ist das Bereitstellen der Instrumente zur Neuaufbereitung und/oder Reparatur. So kann beispielsweise gemäss den Merkmalen im Anspruch 15 ein bestimmtes Instrument, beispielsweise ein Meissel, nach einer bestimmten Anzahl Einsätze zum Nachschleifen identifiziert und ausgeschieden werden, wobei alle für die Neuaufbereitung relevanten Daten als Protokoll ausgedruckt werden können.

Im Bereich Qualitätsmanagement können ebenfalls unterschiedliche Überwachungsaufgaben ausgeführt werden, insbesondere die lückenlose Rückverfolgbarkeit sämtlicher Arbeitsabläufe, die Überwachung der Verfalldaten nach erfolgter Sterilisation, die Anzahl der Sterilisationen pro Instrument und vieles mehr.

Im Bereich der betriebswirtschaftlichen Daten können beispielsweise die Kosten oder der Inventarwert eines Instruments überwacht werden. Auch die zukünftigen Kosten oder die mögliche Neuanschaffung lassen sich budgetieren.

Weitere Vorteile und Einzelmerkmale der Erfindung ergeben sich aus der nachfolgenden Beschreibung von Ausführungsbeispielen und aus den Zeichnungen. Es zeigen:
- Figur 1: Ein stark schematisierter Arbeitsablauf beim Anbringen eines Datenträgers,
- Figur 2: eine stark vergrösserte Draufsicht auf einen Datenträger an einem chirurgischen Instrument,
- Figur 3: eine nochmals vergrösserte Darstellung des Datenträgers gemäss Figur 2,
- Figur 4: ein Querschnitt durch den Datenträger gemäss Figur 3,
- Figur 5: das Detail A gemäss Figur 4 in stark vergrösserter Darstellung,
- Figur 6: eine perspektivische Darstellung eines Lesekopfs,
- Figur 7: ein den Benutzungskreislauf chirurgischer Instrumente darstellendes Diagramm und
- Figur 8: ein die Datenerfassung an chirurgischen Instrumenten darstellendes Diagramm.

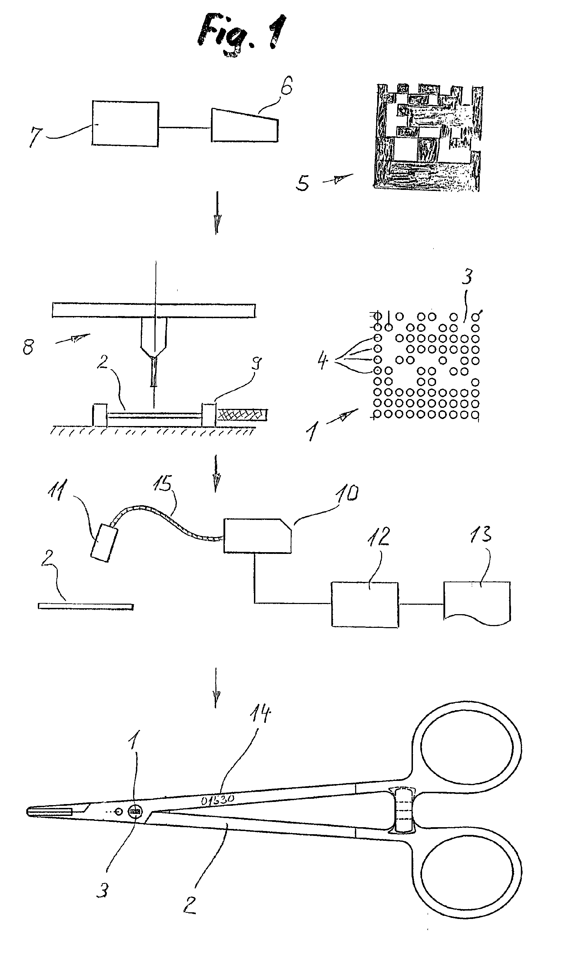

Wie in Figur 1 dargestellt, wird zum Anbringen eines maschinenlesbaren Datenträgers beispielsweise an einem chirurgischen Instrument 2 wie folgt vorgegangen:

Nach der Definition der abzuspeichernden Daten, werden diese als alphanumerischer Code an der Eingabekonsole 6 eines Matrixrechners 7 eingegeben. Der Matrixrechner bestimmt auf hier nicht näher dargestellte Art und Weise den Matrixcode 5, bestehend aus hellen und dunkeln Feldern auf der Matrix.

Dieser Binärcode wird zur Ansteuerung eines Koordinatenbohrwerks 8 benutzt, an dem das Arbeitswerkzeug 2 in einer Spannvorrichtung 9 fest eingespannt ist. Entsprechend dem Matrixcode 5 werden Bohrungen 4 angebracht, welche insgesamt den Datenträger 1 bilden. Wie die Gegenüberstellung zeigt, existiert für jedes dunkle Feld des Matrixcodes eine Bohrung 4, welche gegenüber der Oberfläche des Datenabschnitts 3 die gleiche Kontrastwirkung entfaltet, wie eine Färbung der Oberfläche.

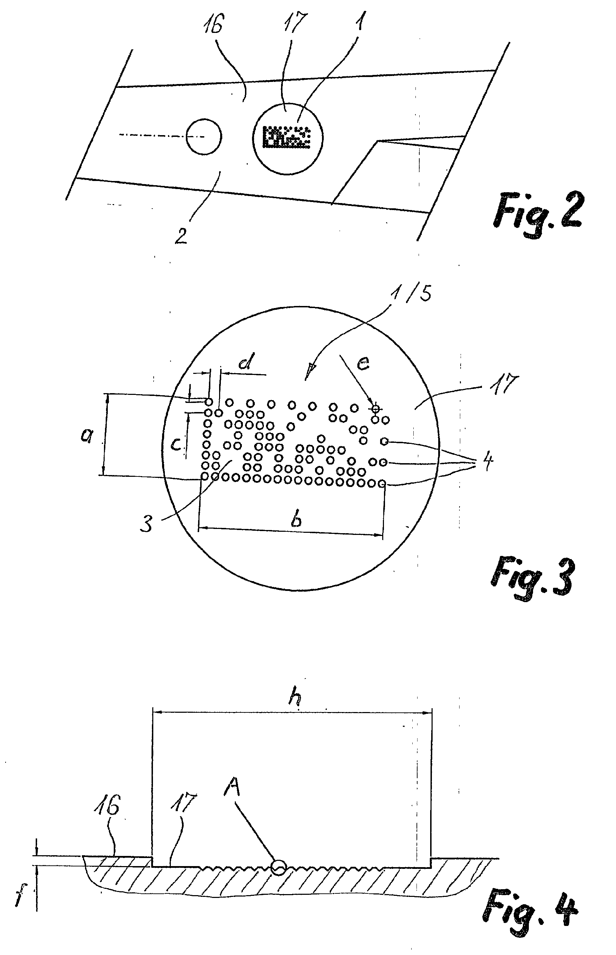

Vor dem Anbringen der Bohrungen wird der Datenabschnitt 3 vorzugsweise als plane Referenzfläche 17 (Figur 2) aus dem Arbeitswerkzeug 2 herausgefräst. Dieser Vorgang kann ebenfalls im Bohrwerk 8 oder auch in einem separaten Arbeitsgang an einer anderen Maschine erfolgen. Damit wird sichergestellt, dass der Matrixcode stets auf einer planen Oberfläche angebracht ist, um Lesefehler zu vermeiden.

Bevor das Arbeitswerkzeug 2 aus der Spannvorrichtung 9 entfernt wird, erfolgt das Einlesen des Matrixcodes mit einem Lesegerät 10, das auf an sich bekannte Weise über eine flexible Datenleitung 15 mit einem Lesekopf 11 verbunden ist. Das Lesegerät 10 ist mit einer Datenverarbeitungsanlage 12 verbunden, in welcher die verschiedenen Matrixcodes gespeichert sind. Bei erfolgreichem Lesevorgang, d. h. beim Erkennen des Codes werden die gespeicherten Daten für das betreffende Arbeitswerkzeug beispielsweise ergänzt durch das aktuelle Tagesdatum für die Herstellung des Datenträgers, wonach ein Protokoll 13 ausgedruckt werden kann. Gelingt die Identifikation des Codes nicht, müssen gegebenenfalls das Fräsen der Planfläche und der Bohrvorgang wiederholt werden.

Das fertiggestellte chirurgische Instrument 2 ist in Figur 1 etwa im Originalmassstab dargestellt. Der Datenträger 1 kann ersichtlicherweise auf kleinstem Raum untergebracht werden. Vorzugsweise wird zusätzlich zum Matrixcode auch noch ein alphanumerischer Code 14 eingraviert oder auf andere Weise angebracht. Die Identifikation des Arbeitswerkzeugs ist damit nicht ausschliesslich vom Lesegerät abhängig.

Die Figuren 2 bis 5 zeigen weitere Einzelheiten des erfindungsgemässen Datenträgers. Die bereits erwähnte Planfläche 17 wird beispielsweise als kreisförmige Einfräsung in der Werkzeugoberfläche 16 angebracht. Die Einfrästiefe f, d. h. die Distanz zwischen der Werkzeugoberfläche 16 und der Planfläche 17 ist dabei sehr gering und beträgt beispielsweise lediglich 0,1 bis 0,2 mm. Ist die Werkzeugoberfläche 16 beispielsweise konvex oder konkav gewölbt, kann die Planfläche 17 an einzelnen Stellen annähernd mit der Werkzeugoberfläche 16 zusammenfallen. Der Durchmesser h der Einfräsung beträgt beispielsweise 4 mm.

Figur 3 zeigt massliche Einzelheiten des hier rechteckigen ausgebildeten Datenträgers 1. Höhe a und Breite b entsprechen etwa dem Verhältnis 1:2, wobei jeweils der äusserste Matrixschenkel in jeder Richtung durchgehend gebohrt ist. Dies ist für die lagemässige Erkennung des Matrixcodes wichtig. Die einzelnen Bohrungen 4 haben in der Ebene der Planfläche 17 einen Durchmesser e von beispielsweise 0,1 mm, während der Abstand c und d zwischen den Zentren ca. 0,15 mm beträgt.

Das Anbringen feinster Bohrungen auf engem Raum wird technisch ohne weiteres beherrscht. Vergleichbare Bearbeitungsverfahren sind beispielsweise in der Uhrenindustrie bekannt.

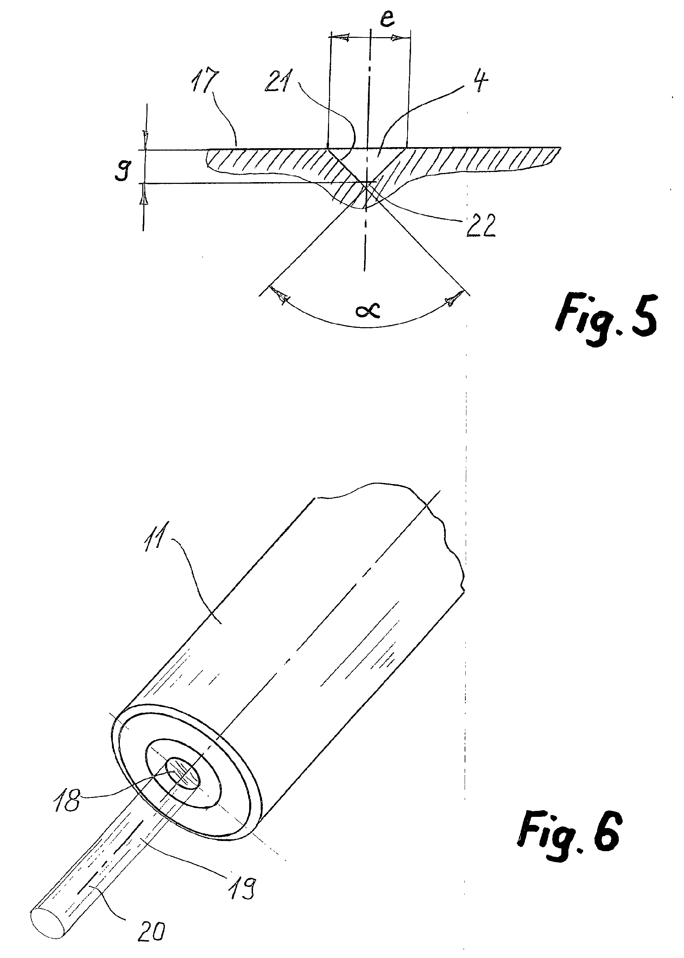

Figur 5 zeigt schliesslich noch eine Bohrung bzw. eine Vertiefung 4 in einem stark vergrösserten Querschnitt. Die Bohrtiefe g, d. h. die Distanz zwischen der Planfläche 17 und dem Grund 22 des Bohrlochs ist äusserst gering und beträgt beispielsweise 0,04 mm bis 0,05 mm. Es hat sich gezeigt, dass im Hinblick auf die Kontrastwirkung mit einem topfförmigen bzw. kegelstumpfförmigen Bohrloch die besten Resultate erzielt werden kann. Die kegelstumpfförmige Mantelfläche 21 hat dabei einen Öffnungswinkel α von beispielsweise 90° oder auch mehr als 90°. An der Mantelfläche 21 wird einfallendes Licht in einem anderen Winkel reflektiert als an der Planfläche 17, bzw. als am Bohrgrund 22 was zu einer besonders vorteilhaften Kontrastwirkung führt. Dieser Effekt wird verstärkt durch eine möglichst in der optischen Achse der Kamera verlaufende Beleuchtung.

Ein gemäss Figur 6 stark vergrösserter Lesekopf 11 hat stirnseitig auf der optischen Achse 20 ein Objektiv 18. Für eine optimale Ausleuchtung ist es zweckmässig, wenn der Lichtrahl 19 der Beleuchtung durch das Objektiv fällt. Das Licht kann zu diesem Zweck in die optische Achse gespiegelt werden.

Nachstehend werden ein paar typische Einsatzmöglichkeiten des erfindungsgemässen Datenträgers am Beispiel von chirurgischen Instrumenten erläutert. Das Ziel besteht dabei im Aufbau eines möglichst vollständigen Informationssystems betreffend sämtliche Vorgänge, welche diese Instrumente betreffen. Selbstverständlich sind vergleichbare Informationssysteme in anderen Bereichen jedoch ohne weiteres denkbar. So könnten beispielsweise in einem Fabrikationsbetrieb Handwerkzeuge und Maschinenwerkzeuge gekennzeichnet und erfasst werden.

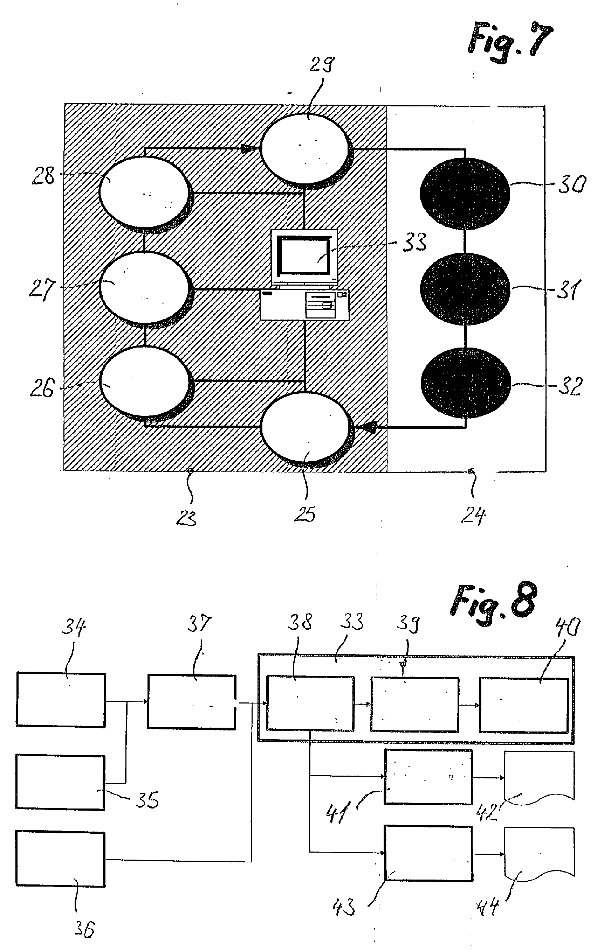

In Figur 7 ist ein typischer Instrumentenkreislauf in einem Spital dargestellt, wobei das schraffierte Feld 23 den eigentlichen Einsatzbereich und das Feld 24 den Retablierungsbereich symbolisiert. Im Zentrum der verschiedenen Benutzungshandlungen steht eine Datenverarbeitungsanlage 33, welche durch Einlesen des Matrixcodes an verschiedenen Arbeitsstationen mit neuen Daten versehen wird. Nach einer Funktionskontrolle 25 der Instrumente werden diese für das Siebpacken 26 freigegeben. Nicht funktionstüchtige Instrumente werden ausgeschieden und der Neuaufbereitung zugeführt (siehe Figur 9). Das setartige Packen der Siebkörbe vor der Sterilisation ist ein wichtiger Vorgang, weil dabei bereits die richtige Packreihenfolge und Zusammenstellung des Siebes mit den einzelnen Instrumenten festgelegt wird. Bereits beim Siebpacken können Kontrollfunktionen mit Hilfe der Datenträger ausgeübt werden, indem im Rechner bestimmte Siebzusammenstellungen vorprogrammiert werden. Fehlt ein Instrument oder wird dem Sieb ein falsches Instrument zugefügt, erfolgt eine entsprechende Anzeige über die Datenverarbeitungseinrichtung.

Die nachfolgende Sterilisation 27 erzeugt ebenfalls bestimmte Betriebsdaten bezüglich Sterilisationsprozess, Dauer, Temperatur, Druck,usw., welche wiederum als ergänzende Daten dem Rechner 33 zugeführt werden können. Umgekehrt ist auch eine Steuerung der Sterilisation über den Rechner 33 in Abhängigkeit der dem Sterilisationsprozess zugeführten Instrumente denkbar.

Die Verschiebung 28 der Instrumente generiert Daten über den Aufenthaltsort der sterilisierten Instrumente und damit über die aktuelle Verfügbarkeit. Schliesslich sind auch die Daten über den Gebrauch 29 der Instrumente von grösster Wichtigkeit für die Rückverfolgung, wobei z. B. genau erfasst werden kann, welches Instrument zu welchem Zeitpunkt an welchem Patienten bei welchem Eingriff eingesetzt wurde.

Im Retablierungsbereich 24 erfolgt zuerst eine Rückführung 30 der Instrumente, der gegebenenfalls eine Dekontamination vorausgeht. Anschliessend erfolgt das Waschen 31 und gegebenenfalls eine vom Typ des Instruments abhängige Pflege 32, bevor der Kreislauf wieder beginnt.

In Figur 8 ist dargestellt, welche wichtigen Daten im Matrixcode enthalten sind und welche Daten in der Datenverarbeitungseinrichtung 33 archiviert und protokolliert werden. Unter den verschiedenen Stammdaten stehen die artikelbezogenen Stammdaten 34 im Vordergrund, welche das Instrument individualisieren. Die klinikbezogenen Stammdaten 35 identifizieren den Standort und/oder den Eigentümer der Instrumente. Die personenbezogenen Stammdaten 36 individualisieren beispielsweise den Arzt, der die Instrumente gebraucht. Wichtig sind schliesslich auch noch die Stammdaten zu den Siebplänen 37, d.h. die Informationen über die Bestückung der Siebe mit den verschiedenen Instrumenten. Derartige Siebpläne müssen vor der Implementierung des Informationssystems im Spital erstellt werden.

Das Zuweisen der Siebinhalte und das Verschieben der Instrumente bildet einen Informationsblock 38, der am Anfang des Kreislaufs gemäss Figur 7 steht. Nicht mehr einsetzbare Instrumente werden zu einer Neuaufbereitung 41 bereitgestellt, wobei ein Reparaturformular 42 ausgedruckt werden kann. Auch der Auftrag 43 für die Neuaufbereitung zusammen mit dem Bestellformular 44 kann über die Datenverarbeitungseinrichtung generiert werden.

Die einsetzbaren Instrumente gelangen anschliessend zum Siebpakken, wobei ein Datenblock 39 dokumentiert wird. Ebenso wird die Zuweisung des Siebs an den gewünschten Standort als Datenblock 40 aufgenommen.

Zwischen dem Benutzer des Arbeitswerkzeugs, also z. B. dem Spital und dem Hersteller, kann auf besonders vorteilhafte Weise ein Datenaustausch erfolgen, um die Neuaufbereitung der Instrumente zu bewirtschaften. Der Hersteller des Instruments verfügt über alle artikelbezogenen Stammdaten bzw. über alle Daten welche die bisherigen Einsätze des Instruments, dessen Alter usw. betreffen. Wird vom Spital eine Neuaufbereitung verlangt (Pos. 43 und 44 Figur 8), kann sich der Hersteller bei den betriebsinternen Abläufen auf die vorhandenen bzw. auf die ihm übermittelten Datensätze abstützen. Diese Datensätze werden um die Parameter der Neuaufbereitung ergänzt.

## Patentansprüche

1. Verfahren zum Anbringen eines maschinenlesbaren Datenträgers (1) an einem Werkstück (2), insbesondere an einem chirurgischen Instrument, **dadurch gekennzeichnet, dass** in einem Datenabschnitt (3) einzelne Vertiefungen (4) angeordnet werden, welche insgesamt einen zweidimensionalen Matrixcode bilden.

2. Verfahren nach Anspruch 1, **dadurch gekennzeichnet, dass** die Vertiefungen mittels Elektroerosion herausgearbeitet werden.

3. Verfahren nach Anspruch 1, **dadurch gekennzeichnet, dass** die Vertiefungen durch ein spanabhebendes Arbeitsverfahren, insbesondere durch Bohren bzw. Fräsen herausgearbeitet werden.

4. Verfahren nach einem der Ansprüche 1 bis 3, **dadurch gekennzeichnet, dass** der Datenabschnitt (3) vor dem Anbringen der Vertiefungen (4) als Planfläche (17) am Arbeitswerkzeug (2) angebracht wird.

5. Verfahren nach einem der Ansprüche 1 bis 4, **dadurch gekennzeichnet, dass** zusätzlich zum Matrixcode ein alphanumerischer Code (14) am Werkstück angebracht wird.

6. Verfahren nach Anspruch 1, **dadurch gekennzeichnet**,
a) dass das Werkstück (2) in einer Spannvorrichtung (9) eingespannt wird,
b) dass zuerst der Datenabschnitt als Planfläche (17) aus dem Werkstück herausgefräst wird,
c) dass anschliessend die Vertiefungen (4) mit einem rechnergesteuerten Koordinatenbohrwerk (8) gebohrt werden,
d) dass der Matrixcode im eingespannten Zustand des Werkstücks mit einem Lesegerät (10) geprüft wird,
e) und dass gegebenenfalls bei nicht identifizierbarem Code die Arbeitsschritte b, c und d wiederholt werden.

7. Werkstück, insbesondere chirurgisches Instrument mit einem maschinenlesbaren Datenträger (1), **dadurch gekennzeichnet, dass** der Datenträger als zweidimensionaler Matrixcode (5) in der Form einzelner Vertiefungen (4) in einem Datenabschnitt (3) ausgebildet ist.

8. Werkstück nach Anspruch 7, **dadurch gekennzeichnet, dass** die Vertiefungen (4) rotationssymmetrisch ausgebildet sind und im Querschnitt einen sich gegen den Grund (22) der Vertiefung verjüngenden, vorzugsweise einen kegelstumpfförmigen Abschnitt (21) aufweisen.

9. Werkstück nach Anspruch 8, **dadurch gekennzeichnet, dass** der sich verjüngende Abschnitt (21) einen Öffnungswinkel (α) von 80° bis 120° aufweist.

10. Werkstück nach einem der Ansprüche 7 bis 9, **dadurch gekennzeichnet, dass** die Vertiefungen (4) in der Ebene des Datenabschnitts (3) einen Durchmesser (e) von weniger als 0,15 mm und einen Abstand (c, d) zwischen den Zentren von weniger als 0,2 mm aufweisen.

11. Werkstück nach einem der Ansprüche 7 bis 10, **dadurch gekennzeichnet, dass** die Distanz (g) zwischen dem Grund (22) der Vertiefung und der Ebene des Datenabschnitts (3) weniger als 0,05 mm beträgt.

12. Lesegerät zum Einlesen eines Datenträgers (1) auf einem Werkstück (2), nach einem der Ansprüche 7 bis 11, **gekennzeichnet durch** einen Lesekopf (11) mit einer in die optische Achse (20) integrierten, zentralen Beleuchtung (9).

13. Verfahren zum Überwachen von mit einem maschinenlesbaren Datenträger versehenen Werkstücken, insbesondere von chirurgischen Instrumenten, wobei jedem Werkstück ein für ihn einmaliger Matrixcode nach einem der Ansprüche 1 bis 11 zugeordnet wird, der für das Werkstück kennzeichnende Stammdaten enthält,
- dass die Stammdaten in einer Datenverarbeitungseinrichtung (33) erfasst werden,
- dass bei jedem Gebrauch des Werkstücks der Datenträger eingelesen und die dabei erfassten Stammdaten mit gebrauchsspezifischen Daten ergänzt, wiederum als Ist-Daten in der Datenverarbeitungseinrichtung gemeinsam gespeichert werden
- und dass die Datenverarbeitungseinrichtung die gespeicherten Ist-Daten mit ebenfalls gespeicherten Soll-Daten vergleicht,
- und aufgrund vorbestimmter Parameter eine Anzeige über den Zustand des Arbeitswerkzeuges erzeugt.

14. Verfahren nach Anspruch 13, **dadurch gekennzeichnet, dass** alle Ist-Daten in der Datenverarbeitungseinrichtung protokolliert werden.

15. Verfahren nach Anspruch 13 oder 14, **dadurch gekennzeichnet, dass** als Ist-Daten die tatsächlichen Einsätze eines Werkstücks gezählt werden und dass als Soll-Daten die maximal zulässige Anzahl Einsätze gespeichert werden, wobei eine Anzeige für eine Neuaufbereitung des Werkzeuges erzeugt wird, wenn die maximal zulässigen Einsätze erreicht sind.

16. Vorrichtung nach Anspruch 15, **dadurch gekennzeichnet, dass** die Neuaufbereitung Ihrerseits als gebrauchsspezifische Daten in der Datenverarbeitungseinrichtung gespeichert wird.
